# DEMANDE DE BREVET EUROPEEN

(11) **EP 0 791 998 A1**
(43) Date de publication de la demande: **27.08.1997**
(21) Numéro de dépôt: 97400325.3
(22) Date de dépôt: 13.02.1997
(51) Int. Cl.: H02G 15/34, F17C 13/00

(54) **Amenée de courant haute tension mixte**

(30) Priorité: 22.02.1996 FR 9602197
(71) Demandeur: GEC ALSTHOM ELECTROMECANIQUE SA, 75116 Paris (FR)
(72) Inventeur: Cottevieille, Christian, 93100 Montreuil (FR); Herrmann, Peter, 91410 Corbreuse (FR); Verhaege Thierry, 91160 Saulx les Chartreux (FR)
(74) Mandataire: Fournier, Michel

(57) **Abrégé**

l'invention concerne une amenée mixte haute tension traversante entre un câble d'énergie haute tension et une application supraconductrice l'amenée comprenant selon un axe d'amenée (3):
- une extrémité conductrice amont (4) à température ambiante
- des moyens conducteurs axiaux (5)
- des moyens supraconducteurs axiaux (6) à haute température critique
- une extrémité conductrice terminale (7)
- un échangeur de chaleur (8) à vapeur d'hélium ou équivalent, pour refroidir les moyens conducteurs axiaux (5), étanche par rapport aux moyens supraconducteur (6) et au cryostat (2) et
- une canalisation d'alimentation (9), et une canalisation d'échappement (10), des vapeurs d'hélium, reliées à l'échangeur de chaleur (8),
selon l'invention : au moins une partie (4a) de l'extrémité conductrice amont (4), les moyens conducteurs axiaux (5) et les moyens supraconducteurs axiaux (6) à haute température critique sont entourés d'un manchon axial continu (11) électriquement isolant, les canalisations d'alimentation (9) et d'échappement (10) sont axiales et intégrées dans l'amenée, et les canalisations d'alimentation (9) et d'échappement (10) comprennent chacune un embout de liaison (12, 13) électriquement isolant.

## Description

L'invention concerne une amenée de courant haute tension mixte reliant un câble d'énergie haute tension à température ambiante (environ 300 K), à une application supraconductrice localisée dans un cryostat, généralement à 4,2 K.

L'invention concerne plus particulièrement une amenée mixte haute tension dans laquelle les éléments conducteurs sont refroidis par des vapeurs d'hélium ou équivalent provenant d'un cryogénérateur extérieur relié à la masse.

Les vapeurs d'hélium du cryogénérateur étant déjà nécessaires pour le refroidissement des écrans dans le cryostat, les concepteurs d'amenée mixte se sont penchés sur la possibilité d'utiliser une partie des vapeurs d'hélium du cryogénérateur pour refroidir les éléments conducteurs de la température ambiante à la température de fonctionnement des éléments supraconducteurs à haute température critique auxquels ils sont reliés.

Dans ce but, il a été proposé une amenée de courant comprenant selon un axe d'amenée:
- une extrémité conductrice amont à température ambiante reliée électriquement à un câble d'énergie
- des moyens conducteurs axiaux reliés électriquement à, et en aval de l'extrémité à température ambiante
- des moyens supraconducteurs axiaux à haute température critique reliés électriquement aux, et en aval des moyens conducteurs axiaux
- une extrémité conductrice aval reliée électriquement aux moyens supraconducteurs axiaux à haute température critique et à une application supraconductrice
- un échangeur de chaleur à vapeur d'hélium ou équivalent, pour refroidir les moyens conducteurs axiaux, étanche par rapport aux moyens supraconducteurs et à l'application supraconductrice et
- une canalisation d'alimentation, et une canalisation d'échappement, des vapeurs d'hélium, reliées à l'échangeur de chaleur, et destinés à être reliées respectivement à un tuyau d'alimentation et à un tuyau de retour d'un cryogénérateur producteur de vapeur d'hélium.

Les solutions existantes ne prennent pas en compte les inconvénients supplémentaires liés à l'utilisation d'une telles amenée dans le cadre du convoyage de courant sous haute tension.

Un premier inconvénient de ces solution appliquée à la haute tension résulte des mauvaises qualités diélectriques de l'hélium gazeux pour des températures supérieures à une trentaine de Kelvin. Il existe donc des risques de claquage entre le cryogénérateur à la masse et l'amenée à la haute tension.

Un deuxième inconvénient de cette solution appliquée à la haute tension résulte de la nécessité de maintenir l'intégrité de l'isolant entourant l'amenée haute tension. Cet isolant est destiné à éviter les mêmes problèmes que précédemment mais entre le potentiel du cryostat, rempli en partie d'hélium vapeur issu de l'hélium liquide pour le refroidissement de l'application supraconductrice, et la haute tension de l'amenée.

Le but de la présente invention est de proposer une amenée de courant mixte haute tension à refroidissement des moyens conducteurs par vapeur d'hélium dans laquelle les conditions particulières de sécurité liées à la qualité haute tension de l'amenée sont prises en compte.

A cet effet, l'invention concerne une amenée de courant haute tension traversante entre un câble d'énergie haute tension et une application supraconductrice disposée dans un cryostat, ladite amenée comprenant selon un axe d'amenée:
- une extrémité conductrice amont à température ambiante reliée électriquement au câble d'énergie haute tension;
- des moyens conducteurs axiaux reliés électriquement à, et en aval de l'extrémité à température ambiante;
- des moyens supraconducteurs axiaux à haute température critique reliés électriquement aux, et en aval des moyens conducteurs axiaux;
- une extrémité conductrice terminale reliée électriquement aux moyens supraconducteurs axiaux à haute température critique et à l'application supraconductrice;
- un échangeur de chaleur à vapeur d'hélium ou équivalent, pour refroidir les moyens conducteurs axiaux, étanche par rapport aux moyens supraconducteur de l'amenée et au cryostat; et
- une canalisation d'alimentation, et une canalisation d'échappement, des vapeurs d'hélium, reliées à l'échangeur de chaleur, et destinés à être reliées respectivement à un tuyau d'alimentation et à un tuyau de retour d'un cryogénérateur producteur de vapeur d'hélium, relié électriquement à la terre;
selon l'invention au moins une partie de l'extrémité conductrice amont, les moyens conducteurs axiaux, et les moyens supraconducteurs axiaux à haute température critique sont entourés d'un manchon axial continu électriquement isolant;
les canalisations d'alimentation et d'échappement sont axiales et intégrées dans l'amenée; et
les canalisations d'alimentation et d'échappement comprennent chacune un embout de liaison électriquement isolant destiné à être monté respectivement sur le tuyau d'alimentation en vapeur d'hélium et sur le tuyau de retour des vapeurs d'hélium du cryogénérateur.

Le manchon axial continu électriquement isolant comprend en outre, une métallisation de la face externe, interne au cryostat, mise au potentiel du cryostat et relié à un tore anticorona et une métallisation de la face interne sur toute la hauteur du manchon, mise au potentiel de l'amenée.

Dans un mode de réalisation, les canalisations d'alimentation et d'échappement débouchent coté extrémité conductrice à température ambiante. Cela a pour avantage supplémentaire de pouvoir contrôler et réguler, à température ambiante, les débits et températures des vapeurs d'hélium.

Dans un autre mode de réalisation, la canalisation axiale d'alimentation débouche coté extrémité conductrice terminale.

Les embouts de liaison électriquement et thermiquement isolant sont externes à l'amenée. Notamment, ces embouts peuvent être du type décrit dans EP-A-0629811.

Avantageusement, les moyens conducteurs axiaux comprennent une pluralité de conducteurs axiaux disposés axialement dans l'échangeur, entre l'extrémité à température ambiante et un élément conducteur distributeur de vapeur d'hélium, la canalisation axiale d'alimentation en vapeur d'hélium étant reliée au distributeur, la canalisation d'échappement étant usinée dans l'extrémité à température ambiante.

En outre, pour un meilleur rendement thermique, l'échangeur comprend une pluralité d'écrans sensiblement transversaux définissant un circuit de circulation forcée des vapeurs d'hélium dans l'échangeur entre le distributeur de vapeur d'hélium et la canalisation d'échappement.

Les moyens supraconducteurs à haute température critique comprennent un tube en matériaux supraconducteur haute température critique s'étendant entre le fond de l'élément conducteur distributeur et l'extrémité conductrice terminale, le tube supraconducteur à haute température critique étant chemisé par un tube massif en laiton usiné en hélice. Ce tube en laiton a pour but de permettre, lors d'un incident, la décharge rapide de l'application supraconductrice dans le cas d'un défaut du tube en matériau supraconducteur à haute température critique, sans pour autant augmenter de manière rédhibitoire les pertes en régime de fonctionnement normal.

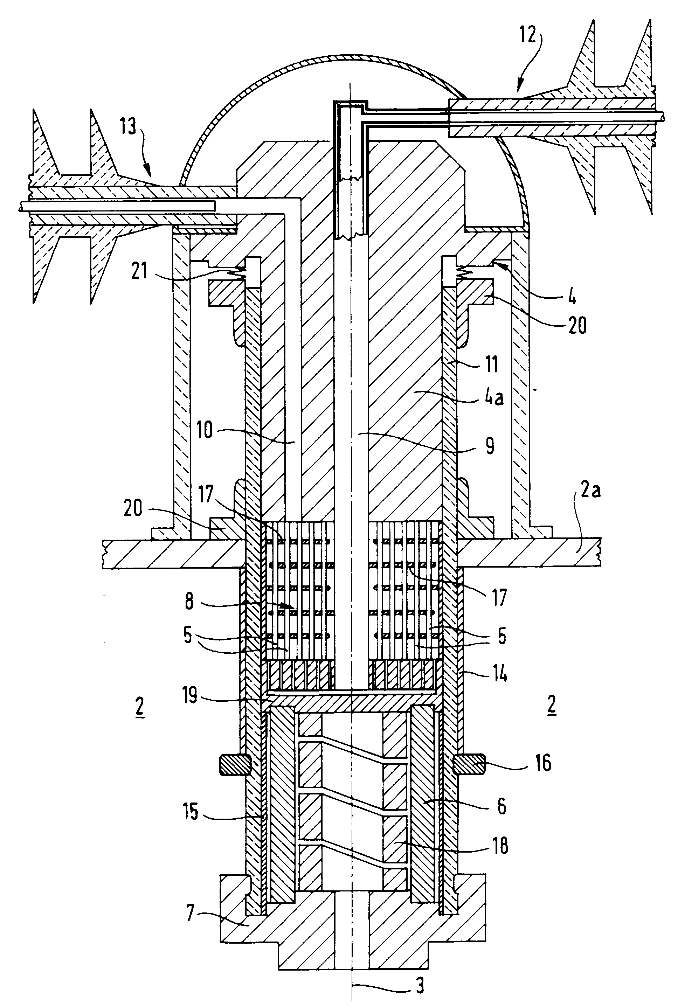

D'autres avantages et caractéristiques de la présente invention résulteront de la description qui va suivre en référence à la figure unique annexée représentant schématiquement une amenée de courant HAUTE TENSION mixte selon l'invention.

Dans la description qui va suivre, les termes "axial" et "transversal" doivent être compris respectivement comme parallèle ou sécant à l'axe 3 de l'amenée de courant. En outre, les termes "amont" et "aval" devront être généralement compris du câble haute tension vers l'application supraconductrice, à moins qu'il ne soit précisé une autre référence.

L'amenée de courant haute tension selon l'invention est destinée à convoyer un courant sous haute tension entre un câble d'énergie haute tension à température ambiante et une application supraconductrice, généralement à 4,2 K, disposée dans un cryostat 2. A cet effet, l'amenée de courant est traversante, c'est à dire qu'elle passe au travers des parois isolantes 2a du cryostat 2, une partie restant externe au cryostat 2, et l'autre partie étant interne au cryostat 2.

L'amenée comprenant selon un axe 3 d'amenée :
- une extrémité conductrice amont 4 à température ambiante reliée électriquement au câble d'énergie haute tension (non représenté)
- des moyens conducteurs axiaux 5 reliés électriquement à, et en aval de l'extrémité 4 à température ambiante
- des moyens supraconducteurs axiaux 6 à haute température critique reliés électriquement aux, et en aval des moyens conducteurs axiaux 5
- une extrémité conductrice terminale 7 reliée électriquement aux moyens supraconducteurs axiaux 6 à haute température critique et à l'application supraconductrice (non représentée)
- un échangeur de chaleur 8 à vapeur d'hélium ou équivalente, pour refroidir les moyens conducteurs axiaux 5, Cet échangeur 8 étant étanche par rapport aux moyens supraconducteur 6 et au cryostat 2, et
- une canalisation d'alimentation 9 thermiquement isolée, et une canalisation d'échappement 10, des vapeurs d'hélium, reliées à l'échangeur de chaleur 8, et destinés à être reliées respectivement à un tuyau d'alimentation et à un tuyau de retour d'un cryogénérateur producteur de vapeur d'hélium relié à la terre (non représenté).

Selon une caractéristique de l'invention, au moins une partie 4a de l'extrémité conductrice amont 4, les moyens conducteurs axiaux 5 et les moyens supraconducteurs axiaux 6 à haute température critique sont entourés d'un manchon axial continu 11 électriquement isolant.

Selon une autre caractéristique de l'invention combinable avec la précédente, les canalisations d'alimentation 9 et d'échappement 10 sont sensiblement axiales, et intégrées dans l'amenée.

Selon une troisième caractéristique de l'invention, combinable avec les deux précédentes, les canalisations d'alimentation 9 et d'échappement 10 comprennent chacune un embout de liaison 12, 13 électriquement et thermiquement isolant destiné à être monté respectivement sur le tuyau d'alimentation en vapeur d'hélium et sur le tuyau de retour des vapeurs d'hélium du cryogénérateur (non représenté).

Ces trois caractéristiques permettent de réduire sensiblement les risques de claquage dus d'une part aux différences de potentielles importantes (Haute Tension) existant non seulement entre le cryogénérateur et l'amenée, mais aussi entre le cryostat et l'amenée, et d'autre part aux qualités diélectriques médiocres des vapeurs d'hélium ayant une température supérieure à une trentaine de Kelvin.

Dans le mode de réalisation représenté sur la figure, le manchon axial continu 11 électriquement isolant comprend, pour la partie introduite dans le cryostat 2, une métallisation 14 de la face externe mise au potentiel du cryostat 2 et relié à un tore anticorona 16 et une métallisation 15 de la face interne mise au potentiel de l'amenée. Le manchon axial continu 11 peut être par exemple du verre époxy.

La liaison étanche, entre la partie de l'extrémité conductrice amont extérieure au cryostat et le manchon axial isolant, est réalisée par l'intermédiaire de deux brides 20 ultravide équipées d'un soufflet 21 destiné à reprendre les rétreints.

La canalisation axiale d'alimentation est une canalisation à isolation thermique de manière que les vapeurs d'hélium arrivent dans l'échangeur à une température de l'ordre de 70 K.

Dans le mode de réalisation représenté sur la figure, les canalisations d'alimentation 9 et d'échappement 10 débouchent coté extrémité conductrice amont 4 à température ambiante. Cette réalisation permet, outre le fait de ne pas dégrader le manchon axial continu isolant 11, de disposer de moyens de contrôle et de régulation des vapeurs d'hélium à température ambiante. Il est en effet connu que les moyens de contrôle et de régulation fonctionnant à basse température (dans le cryostat) sont fragiles et de fonctionnent moins sûr.

Dans le mode de réalisation représenté sur la figure, les embouts de liaison électriquement isolant 12, 13 sont externes. Ils peuvent être, de façon non limitative, du type proposé dans EP-A-0629811.

Les moyens conducteurs axiaux 5 comprennent une pluralité de conducteurs axiaux 5 disposés axialement dans l'échangeur 8, entre l'extrémité amont 4 à température ambiante et un élément conducteur distributeur de vapeur d'hélium 19.

Ces conducteurs axiaux peuvent être des tubes coaxiaux, des conducteurs en barreau, ou des conducteurs comprenant une pluralité de conducteurs élémentaires transposés agencés de façon à développer des surfaces d'échange suffisantes avec et suffisamment irriguées par les vapeurs d'hélium ou équivalent.

La canalisation axiale d'alimentation 9 en vapeur d'hélium est reliée au distributeur 19, et la canalisation axiale d'échappement 10 est façonnée dans l'extrémité amont à température ambiante 4.

Avantageusement l'échangeur 8 comprend une pluralité d'écrans 17 isolants, sensiblement transversaux, et définissant un circuit de circulation forcée des vapeurs d'hélium dans l'échangeur 8 entre le distributeur 19 de vapeur d'hélium et la canalisation axiale d'échappement 10.

Dans le mode de réalisation représenté sur la figure, le distributeur comprend un diffuseur radial des vapeurs d'hélium et une pluralité d'orifices axiaux, de telle manière que le diffuseur radial répartisse les vapeurs d'hélium dans toute la section transversale de l'échangeur à travers la pluralité d'orifices axiaux.

Les moyens supraconducteurs à haute température critique 6 comprennent un tube en matériaux supraconducteur haute température critique 6 s'étendant entre le fond de l'élément conducteur distributeur 19 et l'extrémité conductrice terminale 7. Ce tube peut être, par exemple, en BSCCO.

Avantageusement, le tube supraconducteur à haute température critique 6 est chemisé intérieurement par un tube massif 18 en laiton usiné en hélice reliant électriquement le fond de l'élément conducteur distributeur 19 et l'extrémité conductrice terminale 7. Ce tube massif en laiton 18 a pour but de pallier un défaut du tube en matériau supraconducteur à haute température critique, lors d'un incident nécessitant la décharge rapide de l'application supraconductrice, sans pour autant augmenter de manière rédhibitoire les pertes en régime de fonctionnement normal.

Généralement l'application supraconductrice fonctionne à basse température critique, et, baigne donc dans un bain d'hélium liquide. Le tube supraconducteur à haute température critique 6 est préférentiellement refroidi à la basse température par conduction thermique avec l'extrémité conductrice terminale.

Cette dernière est refroidie soit par circulation forcée d'hélium liquide, soit par immersion dans l'hélium liquide de l'application supraconductrice.

L'isolation électrique entre l'extrémité terminale conductrice 7, au potentiel de l'amenée, et le tore anticorona 16, au potentiel du cryostat, est réalisée soit par le vide, soit par l'hélium liquide. Dans le cas de l'hélium liquide, l'extrémité terminale conductrice est fermée.

Dans un mode de réalisation non représentée, la canalisation axiale d'alimentation 9 en vapeurs d'hélium débouche coté extrémité conductrice terminale.

La traversée de l'amenée à travers les parois 2a du cryostat peut être réalisée de toutes les manières connues.

Le matériau utilisé pour les parties conductrice peut-être par exemple du cuivre ou un alliage à base de cuivre.

Bien entendu, l'invention n'est pas limitée au mode de réalisation décrit et représenté, mais elle est susceptible de nombreuses variantes accessibles à l'homme du métier sans que l'on s'écarte de l'invention.

## Revendications

1. Amenée de courant haute tension traversante entre un câble d'énergie haute tension et une application supraconductrice disposée dans un cryostat (2), ladite amenée comprenant selon un axe d'amenée (3) :
- une extrémité conductrice amont (4) à température ambiante reliée électriquement au câble d'énergie haute tension;
- des moyens conducteurs axiaux (5) reliés électriquement à, et en aval de l'extrémité à température ambiante;
- des moyens supraconducteurs axiaux (6) à haute température critique reliés électriquement aux, et en aval des moyens conducteurs axiaux (5);
- une extrémité conductrice terminale (7) reliée électriquement aux moyens supraconducteurs axiaux (6) à haute température critique et à l'application supraconductrice;
- un échangeur de chaleur (8) à vapeur d'hélium ou équivalent, pour refroidir les moyens conducteurs axiaux (5), étanche par rapport aux moyens supraconducteur (6) et au cryostat (2) et
- une canalisation d'alimentation (9), et une canalisation d'échappement (10), des vapeurs d'hélium, reliées à l'échangeur de chaleur (8), et destinés à être reliées respectivement à un tuyau d'alimentation et à un tuyau de retour d'un cryogénérateur producteur de vapeur d'hélium relié à la terre,
caractérisée en ce que : au moins une partie (4a) de l'extrémité conductrice amont (4), les moyens conducteurs axiaux (5) et les moyens supraconducteurs axiaux (6) à haute température critique sont entourés d'un manchon axial continu (11) électriquement isolant, en ce que les canalisations d'alimentation (9) et d'échappement (10) sont axiales et intégrées dans l'amenée, et en ce que les canalisations d'alimentation (9) et d'échappement (10) comprennent chacune un embout de liaison (12, 13) électriquement isolant destiné à être monté respectivement sur le tuyau d'alimentation en vapeur d'hélium et sur le tuyau de retour des vapeurs d'hélium du cryogénérateur.

2. Amenée de courant haute tension selon la revendication 1 caractérisée en ce que le manchon axial continu (11) électriquement isolant comprend, pour la partie interne au cryostat (2), une métallisation (14) de la face externe mise au potentiel du cryostat (2) et relié à un tore anticorona (16) et une métallisation (15) de la face interne mise au potentiel de l'amenée.

3. Amenée de courant haute tension selon la revendication 1 ou 2 caractérisée en ce que les canalisations axiales d'alimentation (9) et d'échappement (10) débouchent coté extrémité conductrice amont (4) à température ambiante.

4. Amenée de courant selon l'une quelconque des revendications 1 à 3 caractérisée en ce que la canalisation axiale d'alimentation (9) débouche coté extrémité conductrice terminale (7).

5. Amenée de courant haute tension selon l'une quelconque des revendications 1 à 4 caractérisée en ce que les embouts de liaison (12, 13) électriquement isolant sont externes à l'amenée.

6. Amenée de courant haute tension selon l'une quelconque des revendications 1 à 5 caractérisée en ce que les moyens conducteurs (5) comprennent une pluralité de conducteurs axiaux (5) disposés axialement dans l'échangeur (8), entre l'extrémité conductrice amont (4) à température ambiante et un élément conducteur distributeur (19) de vapeur d'hélium, ladite canalisation axiale d'alimentation (9) en vapeur d'hélium étant reliée audit distributeur (19), ladite canalisation axiale d'échappement (10) étant façonnée dans l'extrémité conductrice amont (4) à température ambiante.

7. Amenée de courant haute tension selon la revendication 6 caractérisée en ce que l'échangeur (8) comprend une pluralité d'écrans (17) sensiblement transversaux définissant un circuit de circulation forcée des vapeur d'hélium dans ledit échangeur (8) entre le distributeur (19) de vapeur d'hélium et la canalisation axiale d'échappement (10).

8. Amenée de courant haute tension selon la revendication 6 ou 7 caractérisée en ce que les moyens supraconducteurs à haute température critique (6) comprennent un tube en matériaux supraconducteur haute température critique (6) s'étendant entre le fond de l'élément conducteur distributeur (19) et l'extrémité conductrice terminale (7), le tube supraconducteur à haute température critique (6) étant chemisé intérieurement par un tube massif (18) en laiton usiné en hélice reliant électriquement le fond de l'élément conducteur distributeur (19) et l'extrémité conductrice terminale (7).

9. Amenée de courant haute tension selon l'une quelconque des revendications 1 à 8 caractérisée en ce que les moyens supraconducteurs axiaux (6) à haute température critique sont refroidis de la haute température critique à la température de fonctionnement de l'application supraconductrice, par conduction thermique à travers l'extrémité conductrice terminale (7) baignant dans un liquide cryogénique à la température de fonctionnement de l'application supraconductrice.
